# EUROPEAN PATENT APPLICATION

(11) **EP 1 933 096 A2**
(43) Date of publication of application: **18.06.2008**
(21) Application number: 07120628.8
(22) Date of filing: 14.11.2007
(51) Int. Cl.: F24D 13/02

(54) **Heating panel**

(30) Priority: 20.11.2006 IT TV20060210
(71) Applicant: Scarpa SRL, 31050 Camalò di Povegliano (TV) (IT); Scarpa, Gianfranco, 31050 Ponzano Veneto (TV) (IT)
(72) Inventor: Scarpa, Gianfranco, 31050 Ponzano Veneto (Treviso) (IT)
(74) Representative: Agostini, Agostino

(57) **Abstract**

A heating panel (11) for floors and/or for forming platforms, having at least one internal electrical resistance (20) which can be fed from outside through electrical conductors arranged inside the panel, characterised by comprising one or more connectors having terminals to which said conductors are connected.

## Description

The present invention concerns a heating panel for floors and/or for forming platforms.

Among the various methods of heating the inside of buildings, panels are used to be positioned on the floor and having internal electrical resistances. Systems of this type are described for example in patents JP 2000 193 261 and JP 62 026 425. Heating panels according to the known art usually comprise two or three layers, i.e. a covering surface (made of wood or similar materials suitable for treading on) and a support layer for one or more electrical resistors, connected to each other by conductors to form a circuit. Clearly, during installation the circuit of each panel must be connected to a source of electrical energy to power the resistors. Consequently the positioning and laying of the panels first of all requires the panels to be laid on the floor, and at a later stage requires the leads of each circuit of each panel to be electrically connected. All of this entails the employment both of a fitter and of an electrician, with considerable labour costs and a prolongation of the time for putting the system into operation.

The principal aim of the invention is to provide a panel which overcomes the disadvantages of the known art, ensuring rapid and economical fitting of the panels.

This and other objects are achieved by a heating panel for floors or for forming platforms, having at least one internal electrical resistor (or equivalent dissipating element) which can be fed from outside through electrical conductors arranged inside the panel, characterised by comprising one or more connectors having leads to which said conductors are connected. The use of one or more connectors brings the major advantage of rationalising and speeding up the wiring, allowing the circuits of the various panels to be connected to each other without requiring the intervention of an electrician or specialised personnel.

Even though the arrangement of the connectors can vary, it is advantageous for the panel to include at least two connectors arranged on edges of the panel, in order to avoid inconvenient surface wiring towards the power supply. It is furthermore possible to link together two panels according to the invention by laying them side by side, and this is even easier if at least one of the connectors is of male type and the remainder are of the corresponding female type, and/or are arranged projecting from the panel with respect to its profile (or perimeter), in such a way that between two panels laid side by side a connection (or a joint) can be made between a male connector on one panel and a female connector on the other, by simple juxtaposition. Therefore, in order to install a flooring made up of panels according to the invention it is sufficient to make it up on the ground, to bring the panels alongside each other, and to insert the connectors of one into the corresponding connectors of the other.

The said conductors inside the panels which are connected to a resistor can be: (i) connected to a respective lead of two different connectors (in order to connect the resistor in series to both connectors) or (ii) can be connected to two respective leads of the same connector (for connecting the resistor to the connector "in parallel" (shunt connection)). Each panel can contain one or more resistors, arranged in parallel and/or in series, and the connectors can be used to determine how they are fed, by organising the circuits of their supply conductors.

The panel can include fixing means adapted to fix the panel to another adjacent panel, so as to obtain a complete, solid floor. An effective solution can be achieved if the fixing means comprise, on the edge of the panel, an element retractable inside the panel and a housing in which it can be locked. The layout of the retractable element and the housing are designed so that a retractable element on one panel should be lockable into the corresponding housing on the adjoining panel.

The said housing could consist in the cavity of a groove which extends the whole length of one side of the panel, for example being milled directly in the wood frame of the panel, or could be formed by means of a U-section frame attached to one side of the panel.

The aspects and advantages of the present invention will become clearer from the following description, provided purely by way of example, with reference to the attached drawings in which:
- fig. 1 is a schematic plan view of a panel according to the invention without the treadable covering so that the layout of the internal resistors can be seen;
- fig. 2 is a plan view, schematised as in fig. 1, of a set of panels according the invention, connected to each other;
- fig. 3 is an axonometric view, schematised as in fig. 1, of a detail of the panel shown in fig. 1.

With reference to the drawings, no. 11 indicates a heating panel to be used singly or together with similar panels, to form a heating floor or platform. Panel 11, of rectangular shape, comprises a perimeter frame 18 which supports a plate 12 (usually in thermally insulating material and/or in plywood), onto which is usually fixed a treadable covering layer which covers it entirely (not shown).

On plate 12 are arranged electrical heating resistors 20 (only some of them indicated), connected in parallel to each other by a circuit made up of two conductors in common 14, 15, which are each connected to the leads of two connectors 24, 26 located in opposite positions, and at least one of them located projecting from the edge of panel 11. These connectors can be fixed to frame 18 or to plate 12, for example with adhesive, screws or similar.

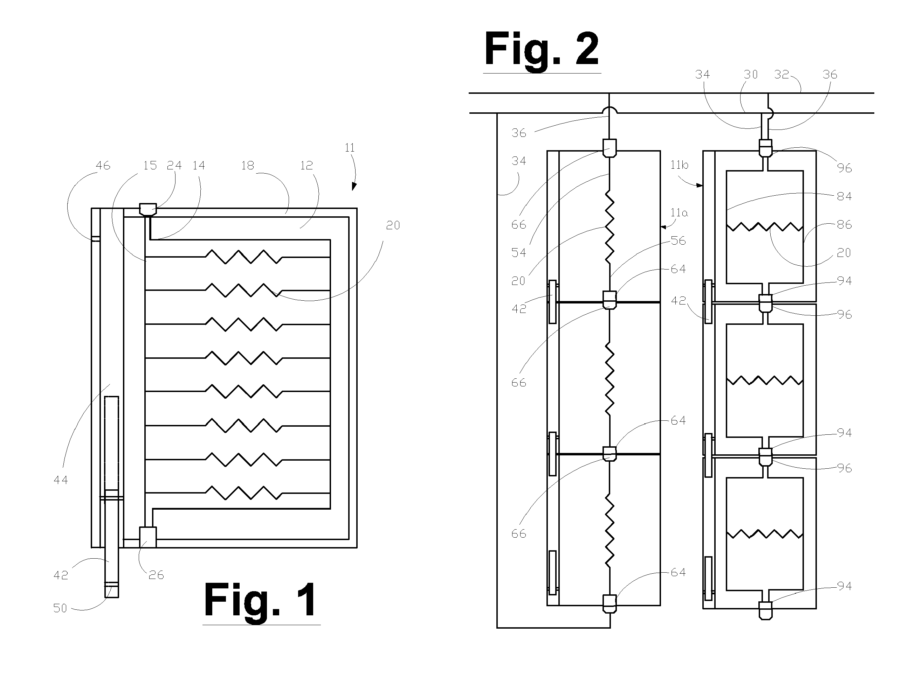

Connectors 24, 26 are respectively one of male type and the other of the corresponding female type, compatible with each other. This conformation allows wide floors or platforms to be to be made up by laying various panels 11 side by side (see fig. 2). Simply juxtaposing the panels enables the male connector 14 of one panel 11 to be plugged into the female connector 15 of another adjacent panel 11. Consequently, when the operation of plugging the connectors 14, 15 of all the panels 11 into each other is completed, the resistors 20 are connected to each other and form part of a single circuit, which can be fed by power supply cables 30, 32 (from the public electricity network, for example) via just two shunt-leads 34, 36 terminating in a connector 24 or 26. Figure 2 shows as an example the connection of resistors 20 in series (on the left, panel labelled 11a) and in parallel (on the right, panel labelled 11b). Even combinations of the two cases are possible. It remains understood that once the number and layout of connections for resistors 20 have been chosen, both the layout within panel 11 and the layout of the entire circuit, connectors 24, 26 must also be adapted, both as regards the number of terminals and/or the wattage, as also must the number of conductors inside panel 11.

For example in the case of panels 11a, b with resistors 20 to be laid out in series with each other, the circuit in each panel 11a has only two conductors 54, 56 (only some of which are indicated), which are fed respectively to the single lead of a male conductor 64 and a female conductor 66. In the case of resistors 20 to be laid out in parallel with each other, the circuit in each panel 11b has - as in fig. 1 - only two conductors 84, 86 , which are fed respectively to the two leads of a male conductor 94 and a female conductor 96.

Other conductors and/or connectors may be used, when there is a need to distribute the power inside the panel or make it available at another point outside it.

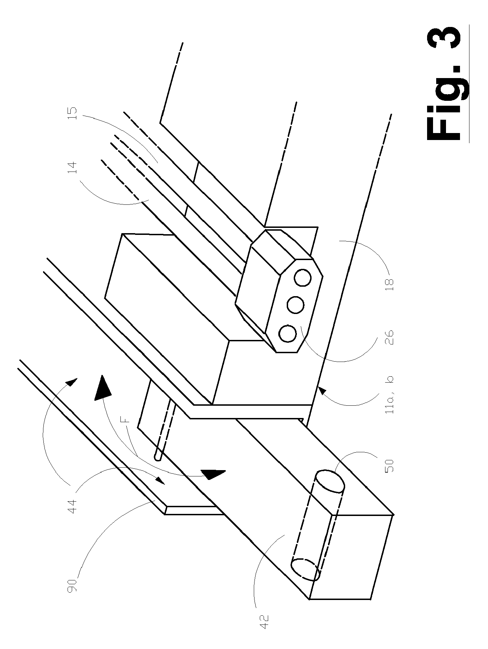

To facilitate assembly and make the structure formed by the panels 11, 11a and 11b more stable, each of them can have a pin 42 rotatably pivoted at one end of the cavity of a groove 44 (see fig. 3) in such a way that pin 42 can rotate (movement F in fig. 3) between a retracted position, in which it lies inside groove 44 (shown in dotted lines in fig. 1), and an extended position, in which it projects from groove 44 and from the outline of the panel. Groove 44, at the opposite end to pin 42, has one or more transverse through-holes 46 , while pin 42 has a single through-hole 50.

It is sufficient to insert the pin 42 of one panel into the groove 44 of another panel, aligning holes 46 and 50. A peg (not shown) can then be inserted into holes 46, 50 to lock pin 42 into groove 44. Groove 44 can be formed by fixing a U-section frame to one side of panel 11.

Although it has not been shown, for electrical safety it is advisable that there should be a ground conductor in the panels, connected to dedicated leads in the connectors.

Functionally or conceptually equivalent modifications and variations are possible, while still remaining within the scope of the invention as defined in the claims which follow.

## Claims

1. A heating panel (11) for floors or for forming platforms, having at least one internal electrical resistor (20) which can be fed from outside through electrical conductors (14, 16) arranged inside the panel, **characterised by** comprising one or more connectors having leads to which said conductors are connected.

2. A panel (11) according to claim 1, comprising at least two connectors (24, 26) located at edges of the panel.

3. A panel (11) according to claim 1 or 2, wherein at least one of the connectors is of male type (24) and the remaining connectors are of the corresponding female type (26).

4. A panel (11) according to claim 3, wherein the male and/or female connectors are arranged projecting from the panel, in such a way that for two juxtaposed panels the connection can be made between a male connector on one panel and a female connector on the other panel.

5. A panel (11a) according to any of claims 2 to 4, wherein the leads of at least one electrical resistor (20) are connected by means of said conductors (54, 56) to a respective lead of two different connectors (64, 66).

6. A panel (11b) according to any of claims 2 to 4, in which the ends of at least one electrical resistor (20) are connected by means of said conductors (84, 86) to two respective terminals of one connector (94, 96).

7. A panel (11) according to any of the preceding claims, comprising fixing means (42, 44, 50, 90) adapted to fix the panel to another adjacent panel.

8. A panel (11) according to claim 7, wherein the fixing means comprise, on the edge of the panel, an element (42) retractable inside the panel and a housing (44) in which it can be locked.

9. A panel (11) according to claim 8, wherein the housing is the cavity of a groove (44) which extends along the whole of one side of the panel.

10. A panel (11) according to claim 9, wherein the groove (44) is formed in a frame (90) which has a U section and which is fixed to the side of the panel.

11. A panel (11) according to claim 9 or 10, wherein the retractable element is a pin (42) rotatably pivoted at one end of the cavity of the groove (44), in such a way that it can rotate between a retracted position, in which it lies inside thegroove, and an extended position, in which it projects from the groove and from the outline of the panel.

12. A panel (11) according to claim 11, wherein the groove (44), at the opposite end to the pin (42), has one or more transverse through-holes (46) into which a peg may be inserted being adapted to locki into the groove (44) a pin (42) on another panel, the peg passing through corresponding alignable holes (46, 50) of the pin (42) and the groove (44).
